**Europäisches Patentamt**

(19) **European Patent Office**

**Office européen des brevets**

(11) Numéro de publication: **0 032 873**
**A1**

(12) # DEMANDE DE BREVET EUROPEEN

(21) Numéro de dépôt: 81440003.2

(51) Int. Cl.³: **F 16 B 37/12**

(22) Date de dépôt: 20.01.81

(30) Priorité: 21.01.80 FR 8001461

(71) Demandeur: **Mamias, Michel, 15, rue du Felsbourg, F-67190 Dinsheim (FR)**

(43) Date de publication de la demande: 29.07.81 **Bulletin 81/30**

(72) Inventeur: **Mamias, Michel, 15, rue du Felsbourg, F-67190 Dinsheim (FR)**

(84) Etats contractants désignés: **AT BE CH DE GB IT LI LU NL SE**

(74) Mandataire: **Nuss, Pierre, 10, rue Jacques Kablé, F-67000 Strasbourg (FR)**

(54) **Procédé pour la réalisation ou la réparation de filetages et dispositif pour la mise en œuvre du procédé.**

(57)     Procédé pour la réalisation ou la réparation de filetages, en particulier de filetages internes de grosse dimension, destinés à recevoir des boulons ou des goujons, lesdits goujons ou boulons étant soumis à des efforts importants de traction, caractérisé en ce qu'à partir d'un filetage interne existant ou d'un alésage cylindrique (4) non fileté, on agrandit par usinage le filetage ou l'alésage sur toute ou partie de sa longueur, à l'exception de la zone d'entrée (7) du filetage ou de l'alésage côté traction, pour réaliser des gorges (8) de sections quelconques aptes à recevoir un insert cylindrique de renforcement garnissant la paroi interne de l'alésage ainsi formé, ledit insert étant muni d'un filetage intérieur 12 apte à recevoir le boulon ou goujon de fixation.

L'invention a également pour objet un insert (11) pour la mise en œuvre du procédé.

Application: en particulier aux cuves de réacteurs nucléaires.

ACTORUM AG

0032873

MAMIAS Michel

15, rue du Felsbourg, DINSHEIM (Bas-Rhin, France)

Procédé pour la réalisation ou la réparation de
filetages et dispositif pour la mise en oeuvre
du procédé

La présente invention a pour objet un procédé
pour la réalisation ou la réparation de filetages, en
particulier de filetages internes de grosse dimension,
et un dispositif pour la mise en oeuvre dudit procédé.

Pour les filetages internes de grosse dimension,
tels que ceux par exemple des cuves nucléaires ou encore
des corps de turbines, on fixe actuellement les boulons
ou les goujons directement dans le corps de l'appareil.

Cette solution présente de multiples inconvénients et en particulier les suivants :

— l'acier ductile nécessairement utilisé pour
la fabrication des éléments ne possède pas les caractéristiques mécaniques requises pour assurer des montages et
des démontages répétés ;

— les conditions de chaleur et de haute pression
engendrent une oxydation des flancs du filet rendant difficile le desserrage des boulons et des goujons, sans oublier
en outre le risque de grippage ;

— les contraintes extérieures engendrées à l'entrée
du filetage côté traction ne permettent pas un agrandissement de l'alésage sur toute sa longueur et en particulier à sa partie supérieure sans remettre en cause la sécurité de l'appareillage.

L'invention a pour objet de pallier ces inconvénients en proposant un procédé pour la réalisation ou la réparation des filetages en particulier de filetages internes de grosse dimension, destinés à recevoir des boulons ou des goujons, lesdits goujons ou boulons étant soumis à des efforts importants de traction, caractérisé en ce que à partir d'un filetage interne existant ou d'un alésage cylindrique non fileté, on agrandit par usinage le filetage ou l'alésage sur toute ou partie de sa longueur, à l'exception de la zone d'entrée du filetage ou de l'alésage côté traction, pour réaliser des gorges de sections quelconques aptes à recevoir un insert cylindrique de renforcement garnissant la paroi interne de l'alésage ainsi formé, ledit insert étant muni d'un filetage intérieur apte à recevoir le boulon ou goujon de fixation.

Selon un mode de réalisation, les gorges usinées sur les parois de l'alésage ou du filetage intérieur déjà existant seront de section sinusoïdale, trapézoïdale ou triangulaire.

Pour éviter le glissement en rotation de l'insert, on disposera au fond du trou borgne une assise clavetée.

L'invention a également pour objet un insert pour la mise en oeuvre du procédé ci-dessus, insert caractérisé en ce qu'il est réalisé par l'assemblage d'une pluralité de secteurs cylindriques munis d'une part sur leur paroi extérieure de gorges venant s'emboîter dans les gorges usinées sur la paroi interne de l'alésage et d'autre part, sur leur paroi intérieure, d'une portion de filetage, l'assemblage des divers secteurs réalisant un filetage intérieur recevant le goujon ou le boulon de fixation.

Le nombre de secteurs sera au moins de 3, de préférence 4.

- 3 -

On comprendra mieux l'invention à l'aide de la description ci-après d'un mode de réalisation préféré, en référence aux dessins annexés, dans lesquels :

la figure 1 est une vue en coupe partielle le long d'un goujon de fixation d'un couvercle sur le corps d'une cuve nucléaire ;

la figure 2 est une vue agrandie en coupe le long d'un goujon, illustrant le mode de fixation de l'art antérieur ;

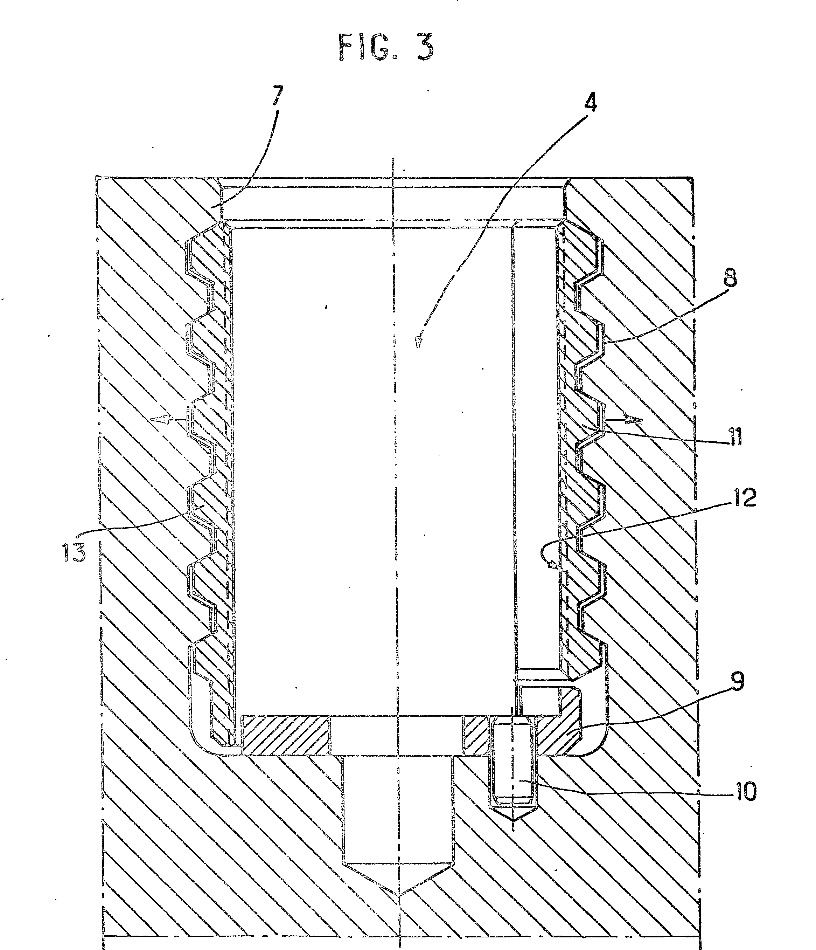

la figure 3 est une vue en coupe selon un alésage muni d'un insert de renforcement conforme à l'invention ;

les figures 4a, b, c, d, illustrent vu de dessus, le positionnement d'un insert conformément à l'invention.

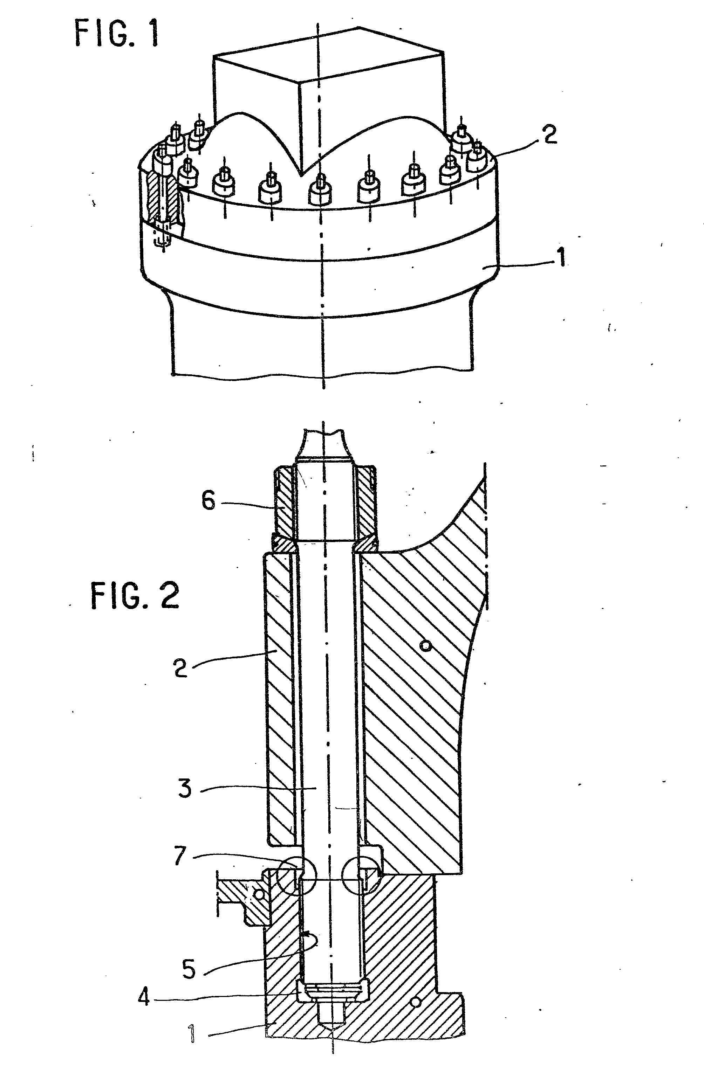

On a représenté figure 1 une cuve nucléaire 1 surmontée d'un couvercle 2 auquel elle est reliée par une pluralité de goujons 3.

Comme on peut le voir sur la figure 2, les goujons 3 sont disposés dans des alésages 4 munis d'un filetage intérieur 5 et ils sont serrés à leur autre extrémité, de manière en soi connue, par des écrous 6 .

On a cerclé sur la figure 2, la zone d'extrémité 7 supportant les contraintes maximales. Cette zone ne peut être élargie sans remettre en cause la sécurité de l'installation.

Conformément à l'invention, on usine l'alésage 4 en l'élargissant, sauf sur la zone 7 qui doit conserver son diamètre initial. On peut effectuer cet usinage soit à partir d'un simple alésage cylindrique, soit à partir d'un alésage muni d'un filetage intérieur endommagé. On usine ainsi des gorges 8 conformément à l'invention. Cet usinage n'a pas besoin d'être extrêmement précis et des tolérances larges sont acceptables. Le couple nécessité pour cet usinage est faible. De ce fait, l'usinage peut s'effectuer, en particulier pour remplacer un filetage endommagé, au travers du couvercle de la cuve, sans avoir donc à démonter l'installation, ce qui est un progrès considérable tant du

- 4 -

point de vue sécurité que du point de vue facilité d'exécution.

Sur la représentation prise à titre d'exemple, les gorges sont de section trapézoïdale. Elles peuvent bien entendu affecter d'autres configurations.

Lorsque l'usinage a été effectué, on dispose dans l'alésage 4 un insert 11. Cet insert cylindrique est muni d'un filetage intérieur 12 correspondant à celui du goujon ou boulon de fixation et de gorges extérieures 13 de profil complémentaire des gorges 8.

Cet insert pourra de par ses dimensions être soumis à tous les traitements thermiques et de surface envisageables, être usiné selon des tolérances très strictes. De plus, et ce point est essentiel, il pourra être réalisé en un matériau répondant au mieux aux exigences de friction, d'oxydation, de dureté, d'état de surface ou autres spécifiques de chaque utilisation.

L'insert 11 est selon l'invention, obtenu à partir d'une pluralité de secteurs cylindriques 14, 15, 16, 17.

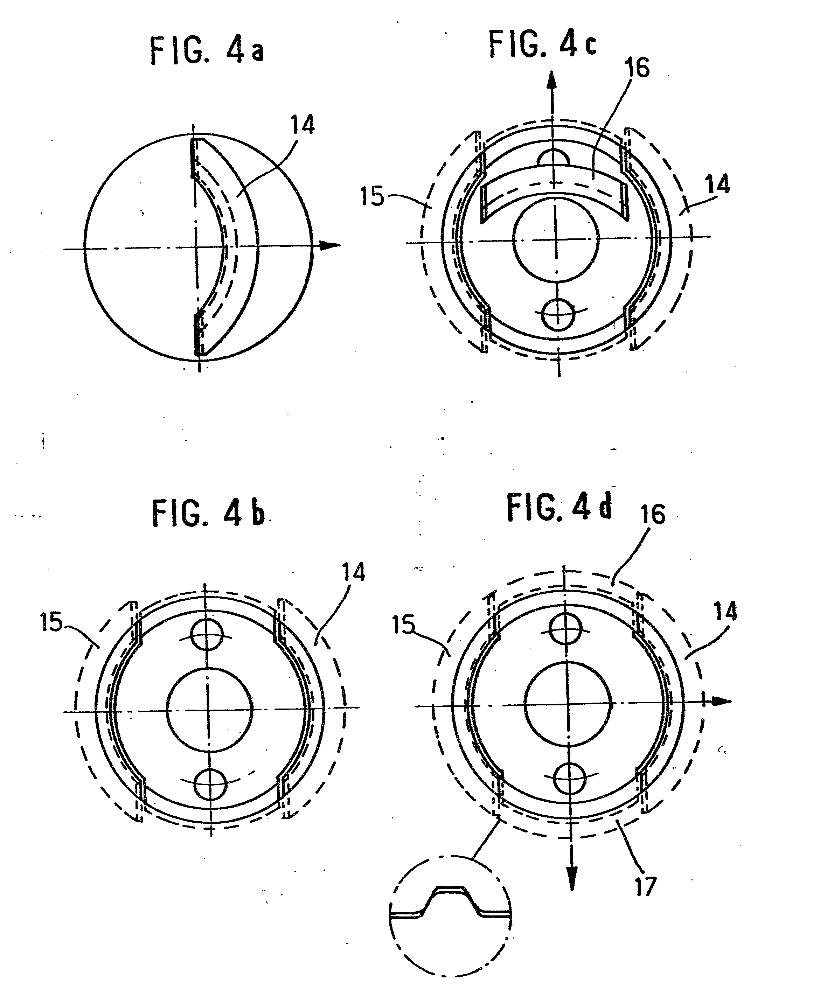

On a schématisé le positionnement successif de chacun des secteurs aux figures 4a, b, c, d. On insère tout d'abord les secteurs 14 et 15, puis on positionne dans le fond du trou borgne une assise 9 elle-même immobilisée en rotation par une clavette 10. Puis on positionne les deux secteurs intermédiaires 16, 17. On réalise ainsi un véritable habillage intérieur de l'alésage 4, l'insert 11 ainsi obtenu comportant un filetage intérieur permettant d'y positionner l'extrémité filetée du goujon ou boulon 3.

D'autres aménagements pourront être apportés. Ainsi, par exemple, les flancs des différents secteurs peuvent être rainurés pour éviter un glissement axial relatif.

L'invention offre un procédé et un dispositif permettant un montage et un démontage simple, permettant en particulier un changement rapide des inserts en cas de détérioration ou de fatigue de ceux-ci.

- R E V E N D I C A T I O N S -

1. Procédé pour la réalisation ou la réparation de filetages en particulier de filetages internes de grosse dimension, destinés à recevoir des boulons ou des goujons, lesdits goujons ou boulons étant soumis à des efforts importants de traction, caractérisé en ce qu'à partir d'un filetage interne (5) existant ou d'un alésage cylindrique (4) non fileté, on agrandit par usinage le filetage ou l'alésage sur toute ou partie de sa longueur, à l'exception de la zone d'entrée (7) du filetage ou de l'alésage côté traction, pour réaliser des gorges (8) de sections quelconques aptes à recevoir un insert cylindrique de renforcement garnissant la paroi interne de l'alésage ainsi formé, ledit insert étant muni d'un filetage intérieur (12) apte à recevoir le boulon ou goujon de fixation (3).

2. Procédé selon la revendication 1, caractérisé en ce que les gorges (8) usinées sur les parois de l'alésage ou du filetage intérieur sont de section sinusoïdale ou trapézoïdale ou triangulaire.

3. Procédé selon l'une quelconque des revendications 1 et 2, caractérisé en ce que pour éviter le glissement en rotation de l'insert (11), on dispose au fond du trou borgne une assise (9).

4. Procédé selon la revendication 3, caractérisé en ce que l'assise (9) est immobilisée par une clavette (10).

5. Insert pour la mise en oeuvre du procédé selon l'une quelconque des revendications 1 à 4, caractérisé en ce qu'il est réalisé par l'assemblage d'une pluralité de secteurs cylindriques (14, 15, 16, 17) munis d'une part sur leur paroi extérieure de gorges venant s'emboîter dans les gorges usinées sur la paroi interne de l'alésage et
d'autre part sur leur paroi intérieure d'une portion de
filetage, l'assemblage des divers secteurs réalisant un
filetage intérieur (12) recevant le goujon ou le boulon
de fixation.

6. Insert selon la revendication 5, caractérisé
en ce qu'il comprend trois secteurs cylindriques.

7. Insert selon la revendication 5, caractérisé
en ce qu'il comprend quatre secteurs cylindriques.

8. Insert selon l'une quelconque des revendications 5 à 7, caractérisé en ce que les flancs des différents secteurs sont rainurés pour éviter un glissement
axial relatif.

0032873

FIG. 1

2

1

FIG. 2

6

2

3

7

5

4

1

FIG. 3

0032873

0032873

FIG. 4 a

14

FIG. 4 c

16

15

14

FIG. 4 b

15

14

FIG. 4 d

16

15

14

17

0032873

Numéro de la demande
EP 81 44 0003

**Office européen des brevets**

## RAPPORT DE RECHERCHE EUROPEENNE

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 943 931 (FORGAARD)<br><br>* résumé 1; figures *<br><br>------- | 1 | F 16 B 37/12 |

**DOMAINES TECHNIQUES RECHERCHES (Int. Cl.³)**

F 16 B
F 16 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | | | |
|---|---|---|---|
| X | Le présent rapport de recherche a été établi pour toutes les revendications | | |

| Lieu de la recherche | Date d'achèvement de la recherche | Examinateur |
|---|---|---|
| La Haye | 05-03-1981 | BAETENS |

OEB Form 1503.1   06.78